# EUROPÄISCHE PATENTANMELDUNG

(11) **EP 1 961 510 A2**
(43) Veröffentlichungstag der Anmeldung: **27.08.2008**
(21) Anmeldenummer: 08150743.6
(22) Anmeldetag: 29.01.2008
(51) Int. Cl.: B23H 7/08

(54) **Erodierelektrode für eine Funkenerosionsvorrichtung**

(30) Priorität: 26.02.2007 DE 102007009191
(71) Anmelder: Patent -Treuhand-Gesellschaft für elektrische Glühlampen mbH, 81543 München (DE)
(72) Erfinder: Franz, Otmar, 86830, Schwabmünchen (DE); Spangenberg, Robert, 86830, Schwabmünchen (DE); Stedele, Klaus, 86911, Obermühlhausen (DE)
(74) Vertreter: Raiser, Franz

(57) **Zusammenfassung**

Die Erfindung betrifft eine Erodierelektrode für eine Funkenerosionsvorrichtung, wobei die Erodierelektrode (3) als Wolframdraht oder Wolframstift ausgebildet ist, dessen Oberfläche eine Wolframkarbidschicht (3a) aufweist.

## Beschreibung

Die Erfindung betrifft eine Erodierelektrode für eine Funkenerosionsvorrichtung. Insbesondere ist eine Erodierelektrode für eine Vorrichtung zum funkenerosiven Bohren von elektrisch leitfähigen Werkstoffen betroffen.

### I. Stand der Technik

Funkenerosionsvorrichtungen und Erodierelektroden dafür sind Stand der Technik. Beispielsweise werden Bohrlöcher in aus gehärtetem Stahl bestehenden Einspritzpumpen für Kraftfahrzeuge durch funkenerosives Bohren erzeugt.

Als Erodierelektroden werden, je nach Material des zu bearbeitenden Werkstoffs, beispielsweise Graphitelektroden, Kupferelektroden oder rund geschliffene Hartmetallelektroden verwendet. Bekannt sind ferner auch Erodierelektroden, die aus einer Wolfram-Kupfer-Legierung bestehen.

### II. Darstellung der Erfindung

Es ist Aufgabe der Erfindung, eine verbesserte Erodierelektrode für eine Funkenerosionsvorrichtung bereitzustellen, die insbesondere zur Bearbeitung von harten Werkstoffen geeignet ist.

Diese Aufgabe wird erfindungsgemäß durch die Merkmale des Patentanspruchs 1 gelöst. Besonders vorteilhafte Ausführungen der Erfindung sind in den abhängigen Patentansprüchen beschrieben.

Die erfindungsgemäße Erodierelektrode ist als Wolframdraht der Wolframstift ausgebildet, dessen Oberfläche mit einer Wolframkarbidschicht versehen ist. Durch die Wolframkarbidschicht besitzt die Erodierelektrode einen deutlich geringeren elektrischen Widerstand, da Wolframkarbid eine höhere elektrische Leitfähigkeit als Wolfram aufweist. Damit wird für das funkenerosive Bohren eine geringere elektrische Spannung benötigt, weil der Spannungsabfall über der Länge der Erodierelektrode durch die Wolframkarbidschicht reduziert wird. Die Wolframkarbidschicht ist außerdem sehr hart und erhöht die Formstabilität der Erodierelektrode. Insbesondere verhindert die Wolframkarbidschicht ein plastisches Biegen, das heißt, eine Verformung der Erodierelektrode. Die mit der Wolframkarbidschicht versehene Erodierelektrode kann nur noch, in engen Grenzen, elastisch gebogen werden. Ein plastisches Biegen, das heißt, der Versuch die erfindungsgemäße Erodierelektrode zu verbiegen, führt unweigerlich zum Bruch der erfindungsgemäßen Erodierelektrode. Dieser Punkt ist insbesondere für die Verwendung der Erodierelektrode beim funkenerosiven Bohren von Bedeutung, da eine Verformung der Erodierelektrode während des funkenerosiven Bohrens des Werkstücks das Werkstück unbrauchbar machen würde. Im Vergleich zu den Erodierelektroden gemäß dem Stand der Technik besitzt die erfindungsgemäße Erodierelektrode durch die Wolframkarbidschicht eine erhöhte Formstabilität.

Die Schichtdicke der Wolframkarbidschicht auf der erfindungsgemäßen Erodierelektrode beträgt vorzugsweise 3 Mikrometer bis 6 Mikrometer. Es hat sich gezeigt, dass diese Schichtdicke bereits eine hohe Formstabilität der Erodierelektrode gewährleistet.

### III. Beschreibung des bevorzugten Ausführungsbeispiels

Nachstehend wird die Erfindung anhand eines bevorzugten Ausführungsbeispiels näher erläutert. Es zeigen:
- Figur 1: Einen schematische Darstellung einer Funkenerosi-onsvorrichtung mit einer Erodierelektrode zum funkenerosiven Bohren eines Werkstücks
- Figur2: Einen Querschnitt durch eine erfindungsgemäße Erodierelektrode zur Verwendung in der Funkenero-sionsvorrichtung gemäß Figur 1

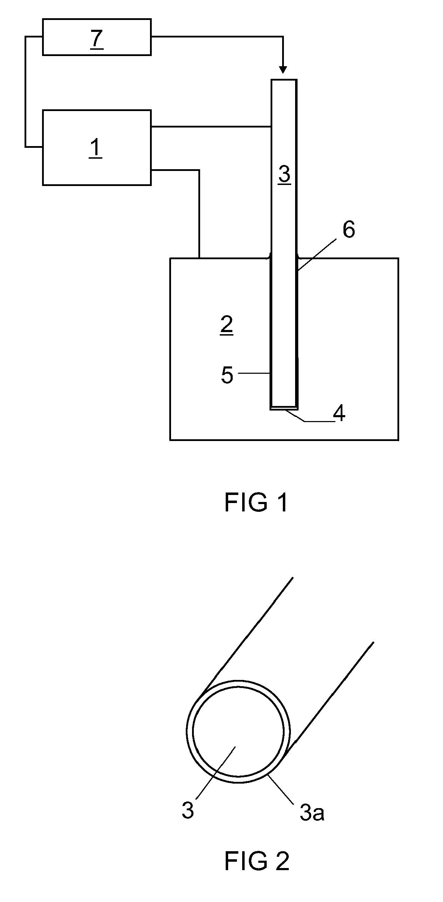

In Figur 1 ist schematisch eine Funkenerosionsvorrichtung dargestellt, die eine erfindungsgemäße Erodierelektrode zum funkenerosiven Bohren eines Werkstücks verwendet.

Diese Funkenerosionsvorrichtung umfasst einen Spannungsregler 1, um an das zu bohrende Werkstück 2 und an die Erodierelektrode 3 eine elektrische Spannung anzulegen, so dass zwischen der Erodierelektrode 3 und dem Werkstück 2 eine elektrische Entladung 4 mit Funkenschlag stattfindet. Die Erodierelektrode 3 arbeitet dabei als Kathode und das elektrisch leitende Werkstück 2 als Anode. Als elektrisch isolierendes Dielektrikum zwischen der Erodierelektrode 3 und dem Werkstück 2 in der Bohrung 5 dient eine elektrische isolierende Flüssigkeit 6, beispielsweise Öl. Durch die Funkenentladung zwischen der Erodierelektrode 3 und dem Werkstoff 2 wird sowohl Material von dem Werkstück 2 als auch von der Erodierelektrode 3 abgetragen. Das heißt, mit der Tiefe der Bohrung in dem Werkstück 2 verkürzt sich die Erodierelektrode 3. Der Abstand zwischen der Spitze der Erodierelektrode 3 und dem Werkstück 2 am Ende der Bohrung 5 wird mit Hilfe eines Vorschubreglers 7 für die Erodierelektrode 3 stetig nachgeregelt. Das abgetragene Material wird mit Hilfe der elektrisch isolierenden Flüssigkeit 6 aus der Bohrung 5 herausgespült.

Bei der Erodierelektrode 3 handelt es sich um einen kreiszylindrischen Stift bzw. Draht aus Wolfram, dessen Oberfläche komplett mit einer Wolframkarbidschicht 3a versehen ist. Die Schichtdicke der Wolframkarbidschicht beträgt ca. 4 Mikrometer. Zum Erzeugen dieser sehr harten Wolframkarbidschicht 3a wird beispielsweise ein übliches Beschichtungsverfahren verwendet oder das Wolfram an der Oberfläche der Erodierelektrode 3 durch einen chemischen Prozess in Wolframcarbid umgewandelt. An der dem Werkstück 2 zugewandten Spitze der Erodierelektrode 3 wird die Wolframkarbidschicht 3a durch die Funkenentladung natürlich wieder beseitigt. Der Durchmesser der Erodierelektrode 3 hängt von dem gewünschten Durchmesser der Bohrung 5 in dem Werkstück 2 ab. Übliche Durchmesser für die Erodierelektrode 3 liegen in dem Wertebereich von 30 Mikrometer bis 300 Mikrometer. Das Werkstück 2 besteht beispielsweise aus gehärtetem Stahl.

Als Ausgangsmaterial für die Herstellung der Erodierelektrode 3 kann beispielsweise reines oder mit Dotierstoffen versehenes Wolfram verwendet werden.

## Patentansprüche

1. Erodierelektrode für eine Funkenerosionsvorrichtung, wobei die Erodierelektrode (3) als Wolframdraht oder Wolframstift ausgebildet ist, dessen Oberfläche eine Wolframkarbidschicht (3a) aufweist.

2. Erodierelektrode nach Anspruch 1, wobei die Schichtdicke der Wolframkarbidschicht (3a) im Bereich von 3 Mikrometer bis 6 Mikrometer liegt.

3. Funkenerosionsvorrichtung mit einer Erodierelektrode (3) gemäß Anspruch 1 oder 2.
